Europäisches Patentamt

European Patent Office

Office européen des brevets

(11) Publication number: **0 184 912**
**A1**

# EUROPEAN PATENT APPLICATION

(21) Application number: **85308341.8**

(22) Date of filing: **15.11.85**

(51) Int. Cl.⁴: **G 01 N 27/66, G 01 N 30/64**

(30) Priority: **19.11.84 US 672646**

(43) Date of publication of application: **18.06.86 Bulletin 86/25**

(84) Designated Contracting States: **DE GB IT NL**

(71) Applicant: **VARIAN ASSOCIATES, INC., 611 Hansen Way, Palo Alto, CA 94303 (US)**

(72) Inventor: **Wells, Gregory J., 530 Trumpeter Drive, Suisun California (US)**

(74) Representative: **Cline, Roger Ledlie et al, STANLEY, POPPLEWELL, POOLE 57 Lincoln's Inn Fields, London WC2A 3LS (GB)**

(54) **Microwave excited helium plasma photoionization detector.**

(57) A photoionization detector for detecting effluents from a gas chromatographic column has a microwave induced helium plasma as the photon source. Since the source plasma may be at atmospheric pressure and need not be sealed, energy loss due to transmission of photons through a window can be eliminated. Use of alternating electromagnetic fields instead of a direct current discharge obviates the problems of anode sputtering.

# Microwave Excited Helium Plasma
## Photoionization Detector

### Background of the Invention

This invention relates generally to a method of detecting effluents from a gas chromatographic column by photoionization and in particular to a photoionization detector of which the photon source is a microwave induced helium plasma.

The photoionization detector is generally constructed in such a manner that photons are generated by a discharge in the presence of a discharge gas and guided into a detecting section to ionize the sample gas, the sample gas ions being collected by an electrode in the detection section for the measurement of ionization current. While compounds such as $O_2$, $N_2$, $H_2$, $H_2O$, $SO_2$ and $NO_2$ give little or no response in a flame ionizaton detector, a photoionization detector is capable of detecting both inorganic and organic constituents with a high sensitivity and hence is suited for gas chromatography.

Prior art photoionization detectors can be divided generally into the following two classes, the first utilizing a low pressure discharge lamp as the photon source and the second using atmospheric pressure discharges. The disadvantage of a sealed source in the case of the former is that the highest photon energy that is available for ionization is limited to about 12eV by the transmission of the window. Since the ionization potential of $O_2$ is 12.08eV, this means that the detector sensitivity cannot be good for this compound. $N_2$ and $H_2$ with ionization potentials respectively of 15.58eV and 15.61eV will not even give a response.

To overcome these limitations, atmospheric pressure discharges in helium were used as light sources including the 21.22eV radiation from HeI line. Since the discharge occurs at atmospheric pressure, no windows are necessary and this allows higher energy photons to be utilized in the ionization process. A direct current discharge detector of this type with a pointed cathode and a conical anode is disclosed, for example, in U.S. Patent No. 3,418,514 issued to J. C. Sternberg. This approach, however, has the disadvantage that the anode is quickly destroyed by the sputtering action of the current of electrons that impinge onto its surface. This results in an increase in noise due to the arc moving around on the surface of the anode.

An attempt to overcome this problem is found in U.S. Patent No. 4,266,196 issued to K. Kawazoe et al which describes a direct current discharge photoionization detector with a point cathode and a disk anode, the claim being that the electron current to the anode in this system is distributed around the edge of the disk and therefore that erosion and noise due to sputtering are reduced. In practice, however, this method fails because sputtering will eventually cause one particular area of the disk to have locations on the surface where the electric field strength is concentrated and hence higher than in the surrounding areas. The distributed arc will then collapse and the sputtering rate at such locations will be accelerated, causing the condensed arc to wander about the anode surface and resulting in an increased noise level.

0184912

-3-

## Summary of the Invention

It is therefore an object of the present invention to provide a photoionization detector with high measuring accuracy.

It is another object of the present invention to provide a photoionization detector which, operating at atmospheric pressure, remains to have a low noise level.

According to this invention, the above and other objects are achieved and the problems of anode sputtering described above are overcome by generating high energy photons from a microwave induced plasma in helium at atmospheric pressure. The use of alternating electromagnetic fields in the microwave region (2-4 GHz) eliminates the sputtering sputtering problems since direct currents are not involved. The type of plasma used herein is often termed an electrodeless discharge because the charged species in the plasma need not come in contact directly with any electrode and can even be completely enclosed by an insulating material.

## Brief Description of the Drawings

FIG. 1 is a cross-sectional view of a microwave excited plasma photoionization detector, showing schematically the construction of one embodiment of this invention.

FIG. 2 is a cross-sectional view of a microwave excited plasma photoionization detector, showing schematically the construction of another embodiment of this invention.

FIG. 3 shows an example of detection of a mixture of hydrocarbons by using a detector of this invention.

FIG. 4 shows an example of detection of oxygen, nitrogen and air by using a detector of this invention.

Detailed Description of the Invention

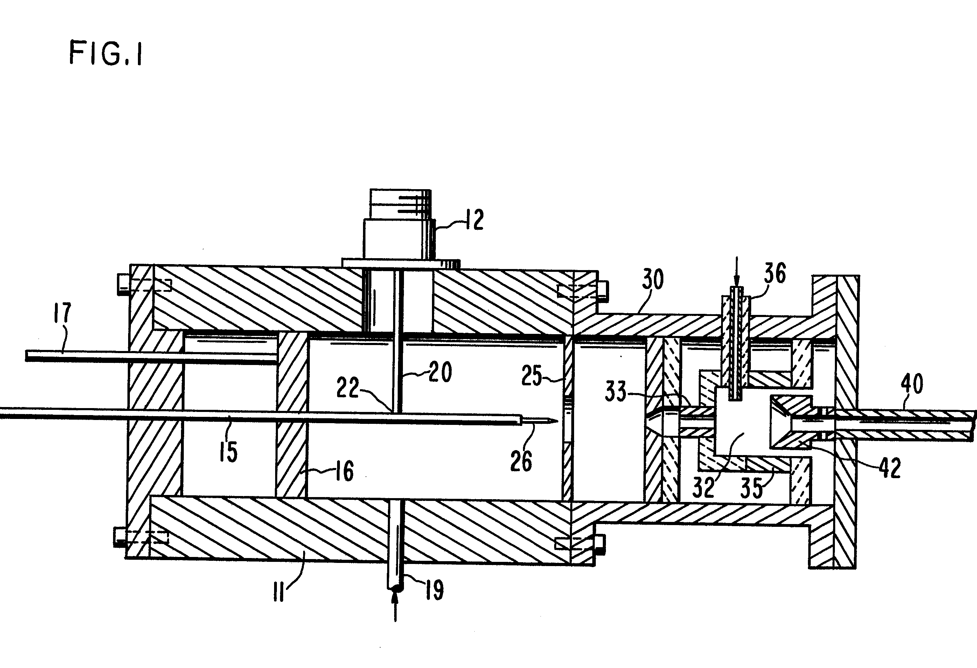

There is shown in FIG. 1 a photoionization detector embodying the present invention including a source of plasma. The region where plasma is generated is inside a metallic cylindrical housing 11. Microwave power (2-4 GHz) enters the region through a UG 58/U connector 12 attached on the outer wall of the housing 11. A central conductor 15 in the shape of a thin rod is positioned and maintained on the symmetry axis of the cylindrical housing 11. The central conductor 15 is supported by a sliding short 16, penetrating it at the center of its piston. A handle 17 is provided to the short 16 so that the short can be moved slidably inside the housing 11. The housing is further provided with a duct 19 with an opening on a side. The duct 19 is connected to a source of helium gas (not shown for the plasma.

An inlet conductor 20 is provided so as to electrically connect the connector 12 with the central conductor 15 so that microwave power entering through the connector 12 will propagate both in forward and backward directions along the central conductor 15. When the sliding short 16 is at the position 1/4 wavelength from the intersection 22 of the central conductor 15 and the inlet conductor 20, the imaginary part of the complex load impedance becomes infinite, and the result is that the power propagating along the central conductor 15 in the direction towards the sliding short 16 is reflected back towards the exit iris 25 provided at the back end of the housing 11. The real part of the complex load impedance, on the other hand, depends on the distance between the intersection 22 and the iris 25 as well as the nature of the plasma located in the iris. Since both of these factors are affected by the separation between the end of the central conductor 15 and the iris 25, this separation may be varied to adjust the real part of the impedance in most cases. When it matches the generator output impedance, there is no reflected power and this has the result that all of the input power is coupled into the plasma. Due to the coupling efficiency, a plasma in helium at atmospheric pressure can be generated with as little as 5 watts of power. The resulting plasma is suspended in the region between the central conductor 15 and the iris 25 and does not touch any surface. In this embodiment, the backward end of the central conductor 15 is shown to contain a needle 26. The sharpness of the needle point has the effect of concentrating the brightest portion of the plasma to nearly a point source.

A detector assembly 30 is disposed directly behind the iris 25, attached through a usual flange-bolt means to the housing 11. According to this embodiment, the detector assembly 30 includes a photoionization detector cell 32 which is substantially of a tubular form with a circular cross section disposed in a coaxial relationship with the central conductor 15, a tubular polarization electrode 33 with a reduced aperture and a circular cylindrical collector electrode 35. An electrically insulated inlet tube 36 for introducing the sample gas from a chromatographic column opens into the cell 32 through a side between the polarization electrode 33 and the collector electrode 35. The aperture of the polarization electrode 33, through which helium gas enters the detector cell 32, is intended to define the spatial extent of the photons entering the collector region such that the photons will be prevented from striking the collector walls and thus ejecting electrons. The reduced aperture of the polarization electrode 33 is for preventing the column effluents from back-diffusing into the plasma. The flow of helium gas entering the housing 11 through the duct 19 is also intended to prevent such back diffusion.

At the other end (distal the iris 25) of the cell 32 is an exit tube 40 for exhausting the discharge and sample gases from the cell 32. Inside the cell 32, there is also provided an exit assembly 42 with a funnel-shaped part facing the inlet tube 36 and a tubular part facing the exit tube 40. One of the purposes of the exit assembly 42 is to contour the flow at the end of the detector cell 32 so as to prevent mixing effects which may occur near the exit tube 40. Another important purpose is to trap any photons that were not absorbed by the sample gas and passed through the cell 32 so that any electrons that are ejected will not be collected. The exit assembly 42 is grounded and electrically isolated from the collector cell 32 and the collector electrode 35.

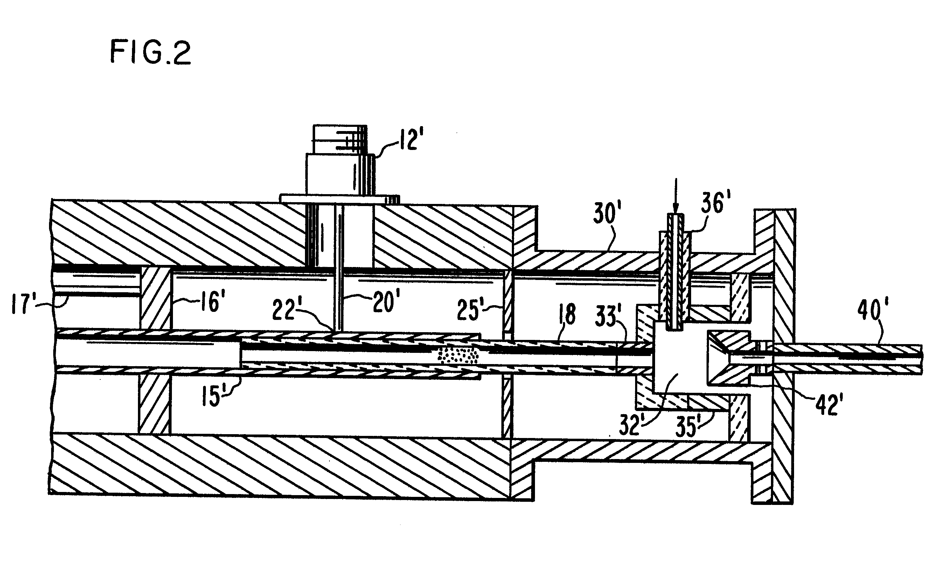

An alternate embodiment of the present invention is shown in FIG. 2 wherein corresponding components are assigned like numerals. In this embodiment, a central conductor 15' is tubular in structure and is intended for helium plasma support gas to flow through. An electrically insulated tube 18', for example, of a ceramic material is supported by it for confining the plasma. This insulative tube 18' passes through the iris 25' and connects directly to the polarization electrode 33'. This design results in a higher plasma density and hence a brighter photon source, eliminating the need to seal the microwave structure 11' against the influx of air. The presence of air outside the insulated tube 18' has the advantage of preventing the formation of a plasma outside of the tube; which would happen if the structure 11' were filled with helium.

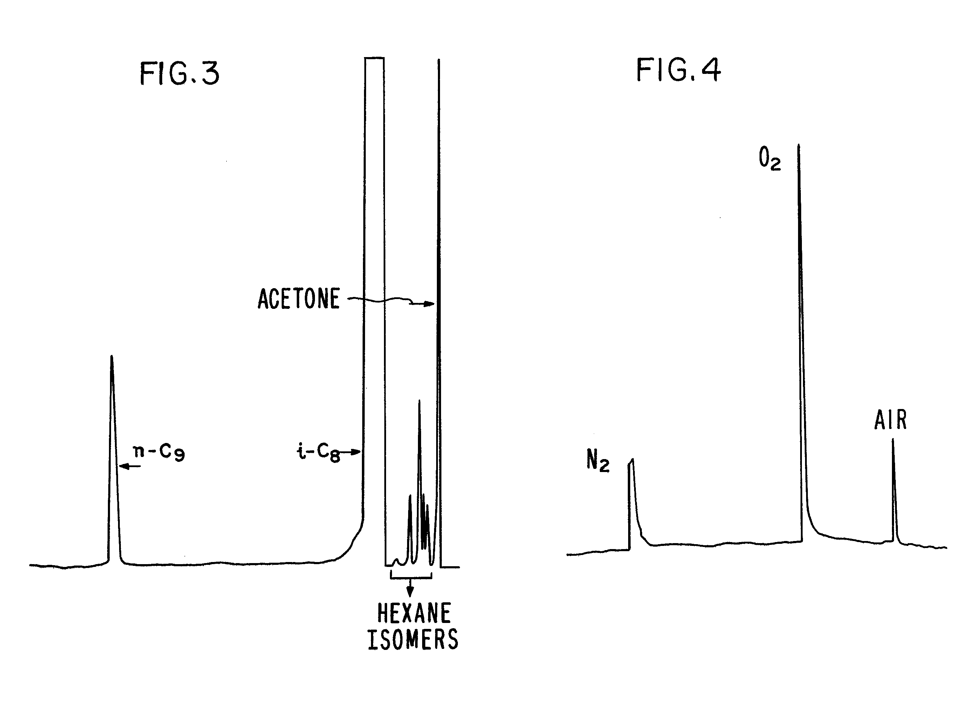

FIG. 3 shows the detection of a mixture of hydrocarbons. The sensitivity for carbon based on nonane was found to be 0.627 coul/gC at 5 watts of power and 1.57 coul/gC when 20 watts was used. This should be compared to 0.015 coul/gC which was obtained by using a flame ionization detector. FIG. 4 shows the detection of oxygen, nitrogen and air.

In the method of this invention, which comprises the step of generating a microwave excited plasma outside a photoionization detector with an opening for photons to pass through, the plasma is preferably a helium plasma, the step of generating a microwave excited plasma preferably includes the steps of providing an elongate central conductor inside a generally cylindrical structure outside said detector, causing microwave power to propagate along said elongate central conductor both towards and away from said opening and adjusting a sliding short provided in said cylindrical structure so that said power propagating away from said opening is reflected back. The elongate central conductor is preferably tubular at least in part and holds therein an electrically insulated pipe for confining a plasma. The method preferably comprises the step of adjustably moving said elongate central conductor longitudinally. Said microwave power is preferably in a frequency range of 2-4 GHz. The plasma is preferably at atmospheric pressure.

## Claims

WHAT IS CLAIMED IS:

1.    A microwave excited plasma photoionization detector comprising a photoionization cell means and a plasma generating means for causing photons to be emitted from a plasma and to propagate into said photoionization cell.

2.    The photoionization detector of claim 1 wherein said cell and said plasma generating means are disposed adjacent to each other so that said photons propagate directly into said cell.

3.    The photoionization detector of claim 2 wherein said cell is substantially tubular in form and comprises a tubular polarization electrode through which said photons are adapted to propagate into said cell.

4.    The photoionization detector of claim 3 wherein said cell further comprises a collector electrode, an inlet tube for introducing a sample gas into said cell and an exit tube for discharging gas from inside said cell.

5.    The photoionization detector of claim 3 wherein said cell further comprises a funnel-like structure adapted to contour the gas flow inside said cell and to trap photons incident thereon so that any electrons ejected will not be collected by said collector electrode.

6.    The photoionization detector of claim 2 wherein said plasma generating means comprises a tubular housing defining a symmetry axis, a sliding short adapted to adjustably move longitudinally along said symmetry axis, an elongate central conductor on said symmetry axis and a connector means for introducing microwave power from outside into said plasma generating means.

7. The photoionization detector of claim 6 wherein said plasma generating means further comprises an inlet conductor means for defining an intersection point on said elongate central conductor and electrically connecting said connector means with said elongate central conductor at said intersection point.

8. The photoionization detector of claim 7 wherein said plasma generating means further comprises a handle means for adjustably varying the distance along said elongate central conductor between said sliding short and said intersection point.

9. The photoionization detector of claim 8 wherein said elongate central conductor contains a needle which points to said cell.

10. The photoionization detector of claim 8 wherein said elongate central conductor holds an electrically insulated tube for confining a plasma.

11. A method of using a photoionization detector with an opening for photons to pass through, said method comprising the step of generating a microwave excited plasma outside said detector.

FIG.1

FIG.2

12'

30'    36'

17'

16'    22'    20'    25'    18    33'    40'

15'    32'    35'    42'

2/3

0184912

FIG.4

O$_2$

N$_2$

AIR

FIG.3

ACETONE

n-C$_9$

i-C$_8$

HEXANE ISOMERS

0184912

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | US-A-4 398 152 (R.C. LEVESON) <br> * Abstract; columns 1,2; claims * | 1 | G 01 N 27/66 <br> G 01 N 30/64 |
| Y | ANALYTICAL CHEMISTRY, vol. 53, no. 9, August 1981, pages 1336-1340, American Chemical Society, US; S.A. ESTES et al.: "High-resolution gas chromatography of trialkyllead chlorides with an inert solvent venting interface for microwave excited helium plasma detection" <br> * Abstract; page 1337, paragraph: "Microwave power train" * | 1 | |
| A | US-A-4 158 775 (R.A. FROSCH) <br> * Abstract; claims * | 1 | |
| A | US-A-3 933 432 (J.N. DRISCOLL) <br> * Abstract; column 1 * | 1 | TECHNICAL FIELDS SEARCHED (Int. Cl.4) <br><br> G 01 N 27/64 <br> G 01 N 27/66 |
| A | GB-A- 989 614 (NATIONAL RESEARCH DEVELOPMENT CORP.) <br> * Whole document * | 1 | G 01 N 30/64 |
| D,A | US-A-4 266 196 (K. KAWAZOE) <br> * Abstract; column 1 * | 1 | |

The present search report has been drawn up for all claims

| Place of search | Date of completion of the search | Examiner |
|---|---|---|
| THE HAGUE | 06-03-1986 | CALLEWAERT-HAEZEBROU |